# EUROPÄISCHE PATENTSCHRIFT

(11) **EP 3 989 020 B1**
(45) Veröffentlichungstag und Bekanntmachung des Hinweises auf die Patenterteilung: **04.12.2024**
(21) Anmeldenummer: 20202873.4
(22) Anmeldetag: 20.10.2020
(51) Int. Cl.: G05B 19/418

(54) **TRACK UND TRACE-VERPACKUNGSVERFAHREN**
TRACK AND TRACE PACKAGING METHOD
PROCÉDÉ D'EMBALLAGE DE SUIVI ET DE TRAÇAGE

(43) Veröffentlichungstag der Anmeldung: 27.04.2022
(73) Patentinhaber: Uhlmann Pac-Systeme GmbH & Co. KG, 88471 Laupheim (DE)
(72) Erfinder: Haug, David, 89073 Ulm (DE)
(74) Vertreter: Wächter, Jochen

(56) Entgegenhaltungen:
- WO-A1-2014/126654
- US-A1- 2011 106 681
- US-A1- 2014 330 685
- US-A1- 2020 154 722

## Beschreibung

Die Erfindung betrifft ein Track und Trace-Verpackungsverfahren für das Verpacken von Gütern mit einem oder mehreren Prozessschritten, wobei eine Anzahl von Produkten in einem Batch einer oder mehreren nachverfolgbaren Packungseinheiten, insbesondere unterschiedlicher Größe, zugeführt wird.

Die Erfindung betrifft ebenfalls ein System bestehend aus einer Verpackungsanlage, einem oder mehreren mobilen Endgeräten und einer Steuereinheit für die Verpackungsanlage sowie ein mobiles Endgerät zur Verwendung in dem Track und Trace-Verpackungsverfahren.

Darüber hinaus betrifft die Erfindung ein Computerprogramm und ein Computerprogrammprodukt mit Programmcodemitteln.

Aus dem Stand der Technik sind unterschiedliche Verfahren zur Rückverfolgung von Objekten und Track und Trace-Verfahren bekannt. Dabei soll zu einem Produkt oder zu einer Handelsware jederzeit festgestellt werden können, wann und wo und durch wen die Ware gewonnen, hergestellt, verarbeitet, gelagert, transportiert, verbraucht oder entsorgt wurde. Derartige Kontrollverfahren spielen beispielsweise in der Pharmaindustrie im Bereich Pharmaherstellung eine wichtige Rolle. Insbesondere soll in diesem Bereich eine Fälschungssicherung und Abgabekontrolle sichergestellt werden.

Fälschungen von Verbrauchsgütern, insbesondere im pharmazeutischen und medizinischen Bereich, können neben einem erheblichen wirtschaftlichen Schaden für die Hersteller der Originalverbrauchsgüter eine Gesundheitsgefahr für die Endverbraucher darstellen. In der Fälschungssicherung, bei welcher es unter anderem darum geht, zu verhindern, dass gefälschte Verbrauchsgüter in die offizielle Vertriebskette eingeschleust werden, besteht im Bereich der pharmazeutischen und medizinischen Verbrauchsgüter, insbesondere im Bereich der Betäubungsmittel, zudem die Notwendigkeit einer Abgabekontrolle, um Missbrauch vorzubeugen. Es geht somit nicht nur darum zu verhindern, dass Verbrauchsgüter unerlaubterweise in die Vertriebskette eingeschleust werden, sondern auch darum zu verhindern, dass Verbrauchsgüter unerlaubterweise aus der entsprechenden Vertriebskette entnommen werden.

Im Verpackungsprozess von festen Arzneiformen, insbesondere Tabletten, Pillen, Kapseln oder dergleichen, werden die Verpackungen zur Nachverfolgbarkeit mit einer Kennzeichnung bzw. einem Code oder einer ID versehen. In der Regel geschieht dies frühestens ab der Blisterverpackung. Dann wird die Faltschachtel, anschließend der Versandkarton bis zur aggregierten Palette mit entsprechenden Codes versehen. Zwischen den Packungseinheiten, insbesondere mit unterschiedlichen Größen, folgt eine Aggregation, d. h. es wird eine Eltern-Kind-Beziehung hergestellt. Zwischen bzw. bei jedem Prozessschritt des Verpackungsprozesses werden die Codes gescannt, in eine Datenbank eingespeist und verifiziert.

Oft erfolgt das Abscannen, Bedrucken und Aufkleben von Etiketten mit den entsprechenden Kennzeichnungen bzw. Codes manuell. D. h. ein erster Mitarbeiter scannt einzelne Faltschachteln, ein nächster Mitarbeiter erstellt Bündel von Faltschachteln, ein weiterer Mitarbeiter führt die Faltschachteln entsprechend den Versandkartons zu. Dieser Ablauf ist zeitaufwändig und erfordert einen hohen Personalaufwand.

Bekannte Track und Trace-Systeme basieren auf Industrielösungen mit Interprozesskommunikation (IPC), Kamerasystemen und herkömmlicher Softwaretechnologie. Die Systeme erfordern die Bereitstellung von zusätzlicher Hardware und sind mit Lieferzeiten von mehreren Monaten verbunden.

Die DE 20 2012 102 237 U1 betrifft eine Kontrollvorrichtung für eine Kennzeichnung, insbesondere für die Pharmaindustrie im Bereich der Pharmaherstellung, mit einer Erfassungs- und Verarbeitungseinrichtung zur Erfassung der Kennzeichnung.

Des Weiteren wird auf die EP 2 747 003 A1 verwiesen, welche ein Verfahren und ein System zum Speichern und Abrufen von Verpackungsbeziehungen offenbart.

Die US 2014/0330685 A1 betrifft die Nachverfolgung und Verwaltung von Sachgütern und insbesondere die Nachverfolgung von Sachgütern unter Verwendung eines harmonisierenden Codes, welcher direkt mit einem Sachgut oder mit einer an dem Sachgut befestigten Nachverfolgungseinheit verbunden ist.

Die US 2011/0106681 A1 betrifft ein Verfahren und ein System zur Verwaltung von Entitäten unter Verwendung drahtloser Geräte.

Der vorliegenden Erfindung liegt die Aufgabe zugrunde, ein Track und Trace-Verpackungsverfahren der eingangs erwähnten Art zu schaffen, welches die Nachteile des Standes der Technik vermeidet, insbesondere flexibel und auch in Bereichen mit geringer Automatisierung einsetzbar ist.

Diese Aufgabe wird erfindungsgemäß durch ein Track und Trace-Verpackungsverfahren mit den in Anspruch 1 genannten Merkmalen gelöst.

Erfindungsgemäß wird ein Track und Trace-Verpackungsverfahren für das Verpacken von Gütern mit einem oder mehreren Prozessschritten vorgeschlagen, wobei eine Anzahl von Produkten in einem Batch einem oder mehreren nachverfolgbaren Verpackungseinheiten, insbesondere unterschiedlicher Größe zugeführt wird, welche zur Nachverfolgung mit einer Kennzeichnung versehen werden, die bei dem wenigstens einen Prozessschritt oder zwischen Prozessschritten eingelesen und in einer Datenbank gespeichert und/oder verifiziert wird, wobei:
- auf einer Steuereinheit ein Batchworkflow bzw. Batcharbeitsablauf oder Batchprogrammablauf bzw. Batchprozess mit dem wenigstens einen Prozessschritt zur Bearbeitung des Batchs erstellt wird, und wobei
- sich Benutzer mittels eines mobilen Endgeräts, welches mit der Steuereinheit und/oder wenigstens einem weiteren mobilen Endgerät kommunikationsverbunden ist, an dem Batch oder dem Batchworkflow an- oder abmelden und die Bearbeitung des wenigstens einen Prozessschritts teilweise oder vollständig übernehmen können, wobei wenigstens ein Prozessschritt ganz oder teilweise von einer Verpackungsanlage unterstützend durchgeführt wird, und wobei an dem Batchworkflow angemeldete mobile Endgeräte direkt miteinander kommunikationsverbunden sind und sich gegenseitig in Echtzeit synchronisieren.

Erfindungsgemäß wird ein flexibles Track und Trace-Verpackungssystem bzw. -verfahren vorgeschlagen, bei welchem flexible Prozessstationen vorhanden sind und die an der Produktion teilnehmenden Personen während der Produktion veränderbar sind. Es können auch Produktionsbereiche bedient werden, bei denen nur wenig Automatisierung vorhanden ist und das Personal im Wesentlichen manuell verpackt. Die Benutzer können ihr Track und Trace-Verpackungssystem selbst zum Beispiel über eine digitale Vertriebsplattform für Anwendungssoftware auf die mobilen Endgeräte herunterladen und dort installieren. Dabei können günstige handelsübliche Geräte (mobile devices, Smartphones und Drucksysteme) zum Einsatz kommen. Es ist eine direkte Umsetzung ohne lange Prozesslaufzeiten möglich. Prozesssicherheit kann durch intelligente Maßnahmen und geeignete Führung des Produktionspersonals gewährleistet werden. Ein zu produzierender Batch kann von einem Supervisor auf einem Server erstellt und freigegeben werden. Die Mitarbeiter können sich mit ihrem mobilen Endgerät in den Batch einloggen und eigenständig einzelne Prozessschritte, insbesondere je nach Qualifikation, übernehmen.

Unter mobilen Endgeräten bzw. Mobilgeräten werden vorliegend tragbare Kommunikationsgeräte, die ortsungebunden zur Sprach- und Datenkommunikation eingesetzt werden können, zum Beispiel Mobiltelefone, Smartphones, Netbooks, Notebooks oder Tablets verstanden. Diese sind in der Regel auch mit einer Kamera versehen.

Bei den zu verpackenden Produkten kann es sich insbesondere um feste Arzneiformen, zum Beispiel Tabletten, Pillen, Kapseln oder dergleichen, handeln. Diese werden in nachverfolgbare Packungseinheiten, insbesondere unterschiedlicher Größe, verpackt, welche mit einer Kennzeichnung bzw. einem Code oder einer ID versehen werden. Bei festen Arzneiformen geschieht dies ab der Blisterverpackung, dann die Faltschachtel, anschließend der Versandkarton bis zur aggregierten Palette. Zwischen den unterschiedlichen Packungseinheiten kann eine Aggregation erfolgen, d. h. es wird eine Eltern-Kind-Beziehung hergestellt. Die Kennzeichnung kann durch Aufbringen einer Beschriftung oder eines RFID-Tags bzw. RFID-Chips, auf dem eine ID gespeichert ist, erfolgen. Es können 1D-Beschriftungsverfahren (z. B. Barcode oder Seriennummer) sowie 2D-Beschriftungsverfahren (z. B. QR-Code oder Datamatrix-Code) verwendet werden. Beim Einsatz eines passiven RFID-Chips wird dieser auf Objekte aufgebracht oder in Objekte eingebettet, wobei die im Chip gespeicherte ID durch einen Radiowellenimpuls eines geeigneten, aktiven Lesegeräts gelesen werden kann.

Die Steuereinheit kann als Mikroprozessor ausgebildet sein. Anstelle eines Mikroprozessors kann auch eine beliebige weitere Einrichtung zur Implementierung der Steuereinheit und/oder Steuereinrichtung vorgesehen sein, beispielsweise eine oder mehrere Anordnungen diskreter elektrischer Bauteile auf einer Leiterplatte, eine speicherprogrammierbare Steuerung (SPS), eine anwendungsspezifische integrierte Schaltung (ASIC) oder eine sonstige programmierbare Schaltung, beispielsweise auch ein feed programmable gate array (FPGA), eine programmierbare logische Anordnung (PLA) und/oder ein handelsüblicher Computer. Des Weiteren kann die Steuereinheit auch als Server, Linecontroller, SCADA (Supervisory Control And Data Acquisition, d. h. ein Computersystem zur Überwachung und Steuerung technischer Prozesse) oder mobiles Endgerät ausgeführt sein.

Unter Batch soll vorliegend ein Los, d. h. ein Fertigungs- oder Produktionslos, eine Charge oder ein Lot verstanden werden. Dabei kann es sich um eine Menge oder Anzahl von Produkten handeln, die unter gleichen Bedingungen erzeugt, hergestellt oder verpackt wird.

Wenigstens ein Prozessschritt, welcher insbesondere von der Steuereinheit gesteuert wird, wird ganz oder teilweise von einer Verpackungsanlage unterstützend durchgeführt.

Dadurch läuft das flexible Track und Trace-Verpackungsverfahren auch zumindest teilweise automatisiert in Verbindung mit einer Verpackungsanlage ab.

Vorteilhaft ist es, wenn zum Einlesen der Kennzeichnung der wenigstens einen Packungseinheit das mobile Endgerät bzw. dessen Kamera verwendet wird.

Zum Abscannen der Codes auf den Packungseinheiten kann somit in einfacher Weise die Hardware der mobilen Endgeräte genutzt werden. Die meisten mobilen Endgeräte verfügen heutzutage bereits über eingebaute Kamerasysteme, weshalb günstige handelsübliche Mobile Devices zum Einsatz kommen können. Ebenso können handelsübliche Drucksysteme zum Erstellen der mit der Kennzeichnung versehenen Etiketten verwendet werden.

Mehrere Benutzer können parallel denselben Prozessschritt bearbeiten. Dadurch wird die Flexibilität des erfindungsgemäßen Verfahrens weiter erhöht, da im Bedarfsfall mehrere Bearbeiter an dem selben Prozessschritt arbeiten können. Beispielsweise kann ein Bearbeiter, dessen Prozessschritt bereits abgeschlossen ist, in späteren Arbeitsschritten unterstützend mitwirken. Die an der Produktion teilnehmenden Arbeiter sind während der Produktion veränderbar.

Das An- oder Abmelden an dem Batch bzw. dem Batchworkflow kann über die Steuereinheit, über das wenigstens eine weitere mobile Endgerät oder über ein Cloudsystem erfolgen.

An dem Batch bzw. dem Batchworkflow angemeldete mobile Endgeräte synchronisieren sich, insbesondere hinsichtlich der Batchdaten, gegenseitig in Echtzeit. Dabei kann das mobile Endgerät oder alle bzw. die kommunikationsverbundenen mobilen Endgeräte Datenmaster sein. Somit kann eine Master-Master-Synchronisation der mobilen Endgeräte im Rahmen des Track und Trace-Systems in der Produktion erfolgen. Dadurch kann der Verpackungsprozess sehr flexibel gestaltet werden.

In vorteilhafter Weise kann das mobile Endgerät beim nachfolgenden Prozessschritt die Daten des vorangehenden Prozessschritts erhalten, wodurch die Bearbeitung, insbesondere ohne Unterbrechung, fortgesetzt werden kann.

Der Batch bzw. der Batchworkflow kann über ein mobiles Endgerät gestartet werden.

Eine Benutzerauthentifizierung kann über ein Cloudsystem oder eine Verbindung mit einer lokalen Domäne oder durch eine lokale Benutzerverwaltung auf dem mobilen Endgerät erfolgen.

Die Benutzer können Gruppen zugeordnet werden, wobei mittels der Gruppen festgelegt werden kann, welche Prozessschritte ein jeweiliger Benutzer, beispielsweise aufgrund seiner Qualifikation, bearbeiten darf.

Die Mitarbeiter, welche sich mit ihrem mobilen Endgerät in einen Batch einloggen, können eigenständig einzelne Prozessschritte je nach Qualifikation, welche über die entsprechende Gruppenzugehörigkeit festgelegt wird, übernehmen. Die Gruppen können beispielsweise über das Cloudsystem oder die lokale Domäne festgelegt werden.

Jedes mobile Endgerät kann die Rolle des Masters übernehmen und gegebenenfalls den Batch übernehmen und weitere Personen einladen bzw. hinzufügen.

In Anspruch 9 ist ein System bestehend aus einer Verpackungsanlage, einem oder mehreren mobilen Endgeräten und einer Steuereinheit für die Verpackungsanlage angegeben, wobei die Steuereinheit mit der Verpackungsanlage kommunikationsverbunden, mit dem wenigstens einen mobilen Endgerät kommunikationsverbindbar und dazu eingerichtet ist, wenigstens einen auf einem Prozessmodul der Verpackungsanlage ablaufenden Prozessschritt eines erfindungsgemäßen Track und Trace-Verpackungsverfahrens zu steuern, und wobei auf der Steuereinheit ein Batch bzw. Batchworkflow mit dem wenigstens einen Prozessschritt zur Bearbeitung eines Batchs erstellbar ist.

Anspruch 10 betrifft ein mobiles Endgerät zur Verwendung in einem erfindungsgemäßen Track und Trace-Verpackungsverfahren, welches mit der Steuereinheit oder wenigstens einem weiteren mobilen Endgerät kommunikationsverbindbar ist, und welches dazu eingerichtet ist, einen Benutzer an dem Batch bzw. dem Batchworkflow an- oder abzumelden.

Das mobile Endgerät ist ferner dazu eingerichtet, sich oder batchbezogene Daten mit wenigstens einem weiteren kommunikationsverbundenen mobilen Endgerät in Echtzeit zu synchronisieren.

In Anspruch 11 ist ein Computerprogramm mit Programmcodemitteln angegeben, um bei einem erfindungsgemäßen Track und Trace-Verpackungsverfahren einen Benutzer an einem Batch bzw. einem Batchworkflow an- oder abzumelden und/oder um eine Synchronisation von batchbezogenen Daten mit weiteren kommunikationsverbundenen mobilen Endgerät in Echtzeit durchzuführen, wenn das Programm auf einem mobilen Endgerät ausgeführt wird.

Anspruch 12 betrifft ein entsprechendes Computerprogrammprodukt mit Programmcodemitteln, die auf einem computerlesbaren Datenträger gespeichert sind.

Vorteilhafte Ausgestaltungen und Weiterbildungen der Erfindung ergeben sich aus den Unteransprüchen.

Nachfolgend ist anhand der Zeichnung ein Ausführungsbeispiel der Erfindung prinzipmäßig beschrieben.

Es zeigen:
- Fig. 1: eine erste Darstellung zur Verdeutlichung eines erfindungsgemäßen Track und Trace-Verpackungsverfahrens; und
- Fig. 2: eine zweite Darstellung zur Verdeutlichung des erfindungsgemäßen Track und Trace-Verpackungsverfahrens.

In den Figuren sind funktionsgleiche Elemente mit denselben Bezugszeichen versehen.

Bei dem erfindungsgemäßen Track und Trace-Verpackungsverfahren handelt es sich um eine kostengünstige Lösung, welche auch in einfachen und wenig automatisierten Märkten bzw. Bereichen zum Einsatz kommen kann. Das Verfahren kann mittels eines herkömmlichen Tablets als mobiles Endgerät betrieben werden. Das mobile Endgerät kann beispielsweise über eine digitale Vertriebsplattform für Anwendungssoftware selbst eingerichtet werden. Dazu kann eine Registrierung notwendig sein. Auch können Pay-by-Use-Techniken zum Einsatz kommen.

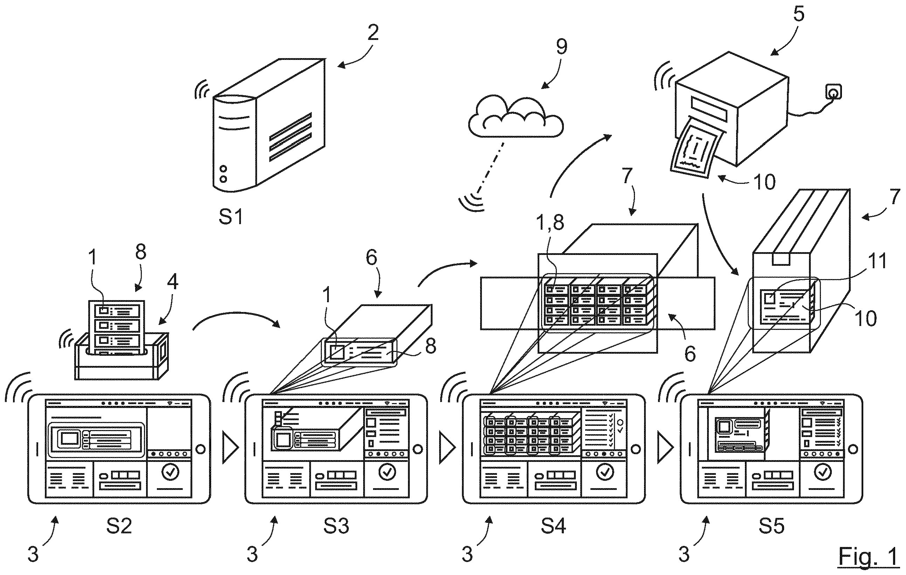

Figur 1 soll den Ablauf eines erfindungsgemäßen Track und Trace-Verpackungsverfahrens für das Verpacken von nicht näher dargestellten Endgütern mit mehreren Prozessschritten S1, S2, S3, S4, S5 verdeutlichen. Dabei wird eine Anzahl von nicht näher dargestellten Produkten, beispielsweise Tabletten, welche in Blisterverpackungen eingebracht sind, als Batch einer oder mehreren nachverfolgbaren Packungseinheiten, insbesondere unterschiedlicher Größe, zugeführt, welche zur Nachverfolgung mit einer eindeutigen Kennzeichnung 1 versehen werden, die bei dem wenigstens einen Prozessschritt S1 - S5 eingelesen bzw. gescannt und in einer nicht näher dargestellten Datenbank gespeichert und/oder verifiziert werden. Bei der Kennzeichnung 1 kann es sich um einen Code bzw. eine ID handeln. Auf einer als Server 2 ausgebildeten Steuereinheit kann in einem Schritt S1 ein Batchworkflow mit dem wenigstens einen Prozessschritt S2 - S5 zur Bearbeitung des Batchs erstellt werden. In weiteren, nicht dargestellten Ausführungsbeispielen könnte es sich bei der Steuereinheit auch um ein Cloudsystem, einen Linecontroller, ein SCADA oder ein mobiles Endgerät handeln. Neben einem oder mehreren als Tablet 3 ausgebildeten mobilen Endgeräten sind Drucker 4 und 5 in Figur 1 abgebildet. Die Geräte 2, 3, 4, 5 können drahtlos, beispielsweise über Bluetooth, WLAN oder dergleichen, miteinander kommunikationsverbunden sein. Die Packungseinheiten sind in dem vorliegenden Ausführungsbeispiel als Faltschachtel 6 und Karton 7 ausgeführt. In die Faltschachteln 6 können zum Beispiel Tabletten in Blisterverpackungen eingebracht werden. In weiteren, nicht dargestellten Ausführungsbeispielen kann es sich selbstverständlich auch um andere Produkte bzw. Güter und entsprechende Packungseinheiten handeln. Benutzer können sich mittels des mobilen Endgeräts, insbesondere Tablets 3, welches mit der als Server 2 ausgeführten Steuereinheit und/oder wenigstens einem weiteren mobilen Endgerät bzw. Tablet 3 kommunikationsverbunden ist, an dem Batch bzw. dem Batchworkflow an- bzw. abmelden und die Bearbeitung des wenigstens einen Prozessschritts S2 - S5 teilweise oder vollständig übernehmen.

In einem weiteren, nicht dargestellten Ausführungsbeispiel kann wenigstens ein Prozessschritt S2 - S5, welcher insbesondere von der Steuereinheit gesteuert wird, ganz oder teilweise von einer nicht dargestellten Verpackungseinlage unterstützend durchgeführt werden.

Wie aus Figur 1 weiter ersichtlich, kann der Benutzer an dem Tablet 3 nachdem er sich an dem Server 2 bzw. an dem Batch angemeldet hat, in einem Prozessschritt S2 über den Drucker 4 entsprechende Etiketten 8 mit der Kennzeichnung 1 für die Faltschachteln 6 ausdrucken. Die Tablets 3 bzw. der Server 2 können mit einem Cloudsystem 9 kommunikationsverbunden sein, um Daten über die produzierten bzw. verpackten Produkte, beispielsweise an eine Regierungsbehörde oder dergleichen, zu übermitteln. Insbesondere im Falle von Arzneimitteln als Produkte kann dies erforderlich sein. Eine Verbindung kann beispielsweise über einen VPN-Tunnel erfolgen.

In einem Prozessschritt S3 können nun von einem Benutzer, welcher sich an dem Batch bzw. Batchworkflow angemeldet hat, die in dem Prozessschritt S2 erzeugten Etiketten auf den Faltschachteln 6 angebracht werden, welche die Blisterverpackungen mit den Tabletten enthalten können. Mittels des Tablets 3 können nun die Faltschachteln 6 über deren Kennzeichnung 1 verifiziert werden.

In einem Schritt S4 werden die Faltschachteln 6 des Batchs zusammengeführt und schichtweise in einen Karton 7 verpackt. Auch hier kann mittels des Tablets 3 ein an dem Batch angemeldeter Benutzer die in einzelnen Schichten angeordneten Faltschachteln 6 in dem Karton 7 verifizieren.

In einem Prozessschritt S5 kann ein Etikett 10 mit einer Kennzeichnung 11 für den Karton 7 nach dem Befüllen des Kartons 7 mit den Faltschachteln 6 und der entsprechenden Verifizierung mittels des Druckers 5 erstellt werden. Das Etikett 10 wird auf dem Karton 7 angebracht und dieser somit zum Abschluss des Track und Trace-Verpackungsverfahrens verifiziert. Dies kann ebenfalls mit dem Tablet 3 erfolgen. In den Schritten S3 - S5 kann eine in Figur 1 nicht näher dargestellte Kamera des Tablets 3 zum Einlesen bzw. Scannen der Etiketten 8, 10 bzw. der Kennzeichnung 1 oder 11 verwendet werden. Für das Einlesen der Schichten von Faltschachteln 6 kann ein Matrixscan verwendet werden. Zwischen den Packungseinheiten, d. h. zwischen der Faltschachtel 6 und dem Karton 7, erfolgt eine Aggregation, wobei eine Eltern-Kind-Beziehung hergestellt wird. Die Verifikation kann durch die Tablets 3 in Verbindung mit einer nicht näher dargestellten Datenbank, welche beispielsweise auf dem Server 2 vorhanden ist, erfolgen.

Zum Einlesen der Kennzeichnung 1, 11 der wenigstens einen, vorliegend als Faltschachtel 6 oder Karton 7 ausgeführten Packungseinheit kann somit das mobile Endgerät, insbesondere das Tablet 3, verwendet werden.

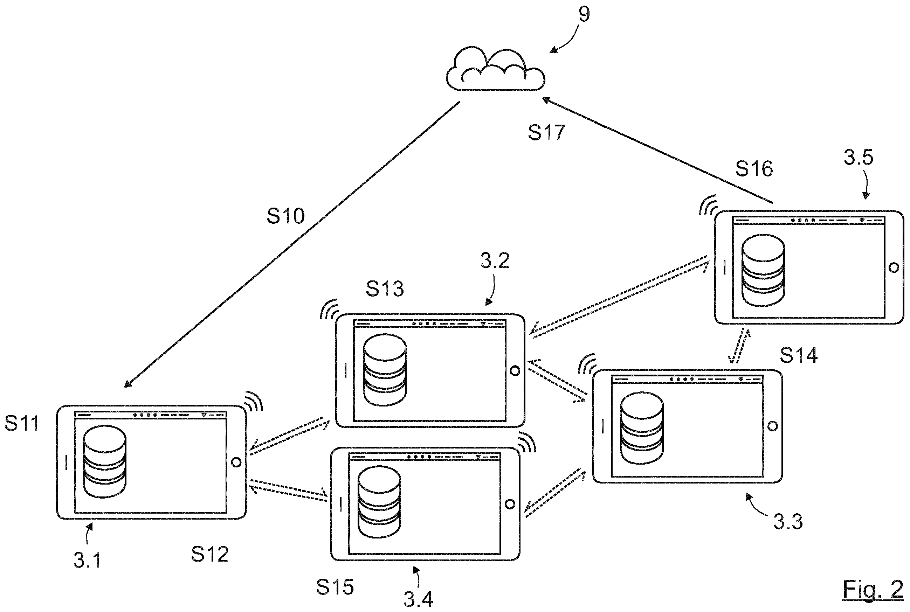

Figur 2 soll die Flexibilität eines erfindungsgemäßen Track und Trace-Verpackungsverfahrens veranschaulichen. In einem Schritt S10 erzeugt bzw. erstellt beispielsweise ein Vorgesetzter im Büro einen neuen Batchworkflow mit wenigstens einem Prozessschritt zur Bearbeitung eines Batchs.

Ein erster Benutzer John besitzt ein Tablet 3.1, mit welchem er einen Batchworkflow starten sowie eine Realisierung oder eine Zusammenstellung durchführen kann. In einem Schritt S11 startet John den Batchworkflow. In einem Schritt S12 bereitet John einige serialisierte Kartons vor.

In Figur 2 sind Echtzeitverbindungen gestrichelt angedeutet.

In einem Schritt S13 tritt Adam der Produktionslinie bei, indem er sich an dem Batchworkflow, den John gestartet hat, mit seinem Tablet 3.2 an Johns Tablet 3.1 einloggt. John bestätigt den Beitritt von Adam. Adam übernimmt das Zusammenstellen des Batchs.

In einem Schritt S14 tritt Linda mit ihrem Tablet 3.3 dem lokalen Netzwerk bei, indem sie über die Echtzeitverbindung mit Adams Tablet 3.2 Kontakt aufnimmt und dieser Linda als Mitarbeiterin bestätigt. Linda arbeitet in der Qualitätsprüfung und entnimmt hin und wieder Proben. Dies erledigt sie für mehrere Produktionslinien.

Beispielsweise könnten auch nach einhundert verpackten Kartons John und Linda die Positionen tauschen, da beide nach einem gewissen Zeitraum eine Abwechslung benötigen.

In Schritten S15 und S16, welche auch parallel ablaufen können, treten Ahmed und Marissa mit ihrem Tablet 3.4 bzw. Smartphone 3.5 dem Team bei. Ahmed ist ein Springer der Gruppe und kann bei Engpässen in den einzelnen Stationen weiterhelfen. Marissa stellt die Paletten für mehrere Produktionslinien zusammen und beendet üblicherweise den Batchworkflow mit einer Benachrichtigung des Cloudsystems 9.

Mehrere Benutzer können parallel denselben Prozessschritt bearbeiten.

Das An- oder Abmelden an dem Batchworkflow bzw. dem Batch kann über die als Server 2 ausgeführte Steuereinheit, über das wenigstens eine als Tablet 3, 3.1, 3.2, 3.3, 3.4 oder Smartphone 3.5 ausgeführte mobile Endgerät oder über das Cloudsystem 9 erfolgen.

Wie aus Figur 2 ersichtlich, synchronisieren sich die an dem Batchworkflow angemeldeten mobilen Endgeräte gegenseitig in Echtzeit.

Das mobile Endgerät kann ein Datenmaster sein. Grundsätzlich können alle kommunikationsverbundenen mobilen Endgeräte Datenmaster sein.

In einem Schritt S17 beendet Marissa den Batchworkflow bzw. Batcharbeitsablauf bzw. den Batchworkflow.

Das mobile Endgerät kann beim nachfolgenden Prozessschritt S2 bis S4 die Daten des vorangehenden Prozessschritts S2 bis S4 erhalten, wodurch die Bearbeitung fortgesetzt werden kann.

Die Benutzerauthentifizierung kann über das Cloudsystem 9 oder über eine Verbindung mit einer lokalen Domain oder durch eine lokale Benutzerverwaltung auf einem mobilen Endgerät erfolgen.

Die Benutzer können Gruppen zugeordnet werden, wobei mittels der Gruppen festgelegt wird, welche Prozessschritte S2-S4 ein jeweiliger Benutzer bearbeiten darf.

In weiteren, nicht dargestellten Ausführungsbeispielen kann der Server 2 auch als eine Steuereinheit für eine Verpackungsanlage ausgeführt sein, welche mit der Verpackungsanlage kommunikationsverbunden und mit einem oder mehreren mobilen Endgeräten kommunikationsverbindbar ist, welche dazu eingerichtet ist, wenigstens einen auf einem Prozessmodul der Verpackungsanlage ablaufenden Prozessschritt des erfindungsgemäßen Track und Trace-Verpackungsverfahrens zu steuern, wobei auf der Steuereinheit ein Batchworkflow mit dem wenigstens einen Prozessschritt S2-S4 zur Bearbeitung eines Batchs erstellbar ist.

Ein in dem erfindungsgemäßen Track und Trace-Verpackungsverfahren verwendetes mobiles Endgerät kann mit der Steuereinheit und/oder mit wenigstens einem weiteren mobilen Endgerät kommunikationsverbindbar und dazu eingerichtet sein, einen Nutzer an dem Batchworkflow an- oder abzumelden.

Das mobile Endgerät kann ferner dazu ausgelegt sein, um über die Kommunikationsverbindung batchbezogene Daten auszutauschen.

Wie aus Figur 2 ersichtlich, kann das mobile Endgerät mit wenigstens einem weiteren kommunikationsverbundenen mobilen Endgerät batchbezogene Daten in Echtzeit synchronisieren.

Auf den mobilen Endgeräten kann ein Computerprogramm mit Programmcodemitteln ausgeführt werden, um bei dem erfindungsgemäßen Track und Trace-Verpackungsverfahren einen Benutzer an dem Batchworkflow an- und/oder abzumelden und/oder um eine Synchronisation mit weiteren kommunikationsverbundenen mobilen Endgeräten, insbesondere von batchbezogenen Daten, in Echtzeit durchzuführen.

Die Steuereinheit kann als Mikroprozessor ausgebildet sein. Anstelle eines Mikroprozessors kann auch eine beliebige weitere Einrichtung zur Implementierung der Steuereinheit und/oder Steuereinrichtung vorgesehen sein, beispielsweise eine oder mehrere Anordnungen diskreter elektrischer Bauteile auf einer Leiterplatte, eine speicherprogrammierbare Steuerung (SPS), eine anwendungsspezifische integrierte Schaltung (ASCI) oder eine sonstige programmierbare Schaltung, beispielsweise auch ein field programmable gate array (FPGA), eine programmierbare logische Anordnung (PLA) und/oder ein handelsüblicher Computer. Des Weiteren kann die Steuereinheit auch als Server 2, Linecontroller, SCADA oder mobiles Endgerät ausgeführt sein.

### Bezugszeichenliste

- 1: Kennzeichnung Faltschachtel
- 2: Server
- 3: Tablet
- 3.1: Johns Tablet
- 3.2: Adams Tablet
- 3.3: Lindas Tablet
- 3.4: Ahmeds Tablet
- 3.5: Marissas Smartphone
- 4: Drucker
- 5: Drucker
- 6: Faltschachtel
- 7: Karton
- 8: Etiketten für Faltschachteln
- 9: Cloudsystem
- 10: Etikett für Karton
- 11: Kennzeichnung Karton
- S1-S5: Prozessschritte
- S10-S17: Schritte

## Patentansprüche

1. Track und Trace-Verpackungsverfahren für das Verpacken von Gütern mit einem oder mehreren Prozessschritten (S1-S5), wobei eine Anzahl von Produkten als Batch einer oder mehreren nachverfolgbaren Packungseinheiten, insbesondere unterschiedlicher Größe, zugeführt wird, welche zur Nachverfolgung mit einer Kennzeichnung (1,11) versehen werden, die bei dem wenigstens einen Prozessschritt (S2-S5) eingelesen und in einer Datenbank gespeichert und/oder verifiziert wird,
wobei auf einer Steuereinheit ein Batchworkflow mit dem wenigstens einen Prozessschritt (S2-S5) zur Bearbeitung des Batchs erstellt wird,
wobei sich Benutzer mittels eines mobilen Endgeräts, welches mit der Steuereinheit und/oder wenigstens einem weiteren mobilen Endgerät kommunikationsverbunden ist, an dem Batch oder dem Batchworkflow an- oder abmelden und die Bearbeitung des wenigstens einen Prozessschritts (S2-S5) teilweise oder vollständig übernehmen können, und
wobei wenigstens ein Prozessschritt (S2-S5) ganz oder teilweise von einer Verpackungsanlage unterstützend durchgeführt wird,
**dadurch gekennzeichnet, dass**
an dem Batchworkflow angemeldete mobile Endgeräte direkt miteinander kommunikationsverbunden sind und sich gegenseitig in Echtzeit synchronisieren.

2. Track und Trace-Verpackungsverfahren nach Anspruch 1, wobei der wenigstens eine Prozessschritt (S2-S5), welcher ganz oder teilweise von der Verpackungsanlage unterstützend durchgeführt wird, von der Steuereinheit gesteuert wird.

3. Track und Trace-Verpackungsverfahren nach Anspruch 1 oder 2, wobei zum Einlesen der Kennzeichnung der wenigstens einen Packungseinheit das mobile Endgerät verwendet wird.

4. Track und Trace-Verpackungsverfahren nach Anspruch 1, 2 oder 3, wobei mehrere Benutzer parallel denselben Prozessschritt bearbeiten können.

5. Track und Trace-Verpackungsverfahren nach einem der Ansprüche 1 bis 4, wobei das An- oder Abmelden an dem Batchworkflow über die Steuereinheit, über das wenigstens eine weitere mobile Endgerät oder über ein Cloudsystem (9) erfolgt.

6. Track und Trace-Verpackungsverfahren nach einem der Ansprüche 1 bis 5, wobei das mobile Endgerät beim nachfolgenden Prozessschritt (S3-S5) die Daten des vorangehenden Prozessschritts (S2-S4) erhält, wodurch die Bearbeitung fortgesetzt werden kann.

7. Track und Trace-Verpackungsverfahren nach einem der Ansprüche 1 bis 6, wobei eine Benutzerauthentifizierung über ein Cloudsystem (9) oder eine Verbindung mit einer lokalen Domäne oder durch eine lokale Benutzerverwaltung auf dem mobilen Endgerät erfolgt.

8. Track und Trace-Verpackungsverfahren nach einem der Ansprüche 1 bis 7, wobei die Benutzer Gruppen zugeordnet werden, wobei mittels der Gruppen festgelegt wird, welche Prozessschritte (S1-S5) ein jeweiliger Benutzer bearbeiten darf.

9. System bestehend aus einer Verpackungsanlage, einem oder mehreren mobilen Endgeräten und einer Steuereinheit für die Verpackungsanlage, wobei die Steuereinheit mit der Verpackungsanlage kommunikationsverbunden mit dem wenigstens einen mobilen Endgerät kommunikationsverbindbar und dazu eingerichtet ist, wenigstens einen auf einem Prozessmodul der Verpackungsanlage ablaufenden Prozessschritt (S2-S5) eines Track und Trace-Verpackungsverfahrens nach einem der Ansprüche 1 bis 8 zu steuern, und wobei auf der Steuereinheit ein Batchworkflow mit dem wenigstens einen Prozessschritt (S2-S5) zur Bearbeitung eines Batchs erstellbar ist.

10. Mobiles Endgerät zur Verwendung in einem Track und Trace-Verpackungsverfahren nach einem der Ansprüche 1 bis 8, welches mit der Steuereinheit und/oder wenigstens einem weiteren mobilen Endgerät kommunikationsverbindbar ist, und welches dazu eingerichtet ist, über die Kommunikationsverbindung batchbezogene Daten auszutauschen, insbesondere einen Benutzer an dem Batchworkflow an- oder abzumelden, und welches ferner dazu eingerichtet ist, mit dem wenigstens einen weiteren kommunikationsverbundenen mobilen Endgerät batchbezogene Daten in Echtzeit zu synchronisieren.

11. Computerprogramm mit Programmcodemitteln, um bei einem Track und Trace-Verpackungsverfahren nach einem der Ansprüche 1 bis 8 einen Benutzer an einem Batchworkflow an- oder abzumelden und/oder um eine Synchronisation von batchbezogenen Daten mit weiteren kommunikationsverbundenen mobilen Endgeräten in Echtzeit durchzuführen, wenn das Programm auf einem mobilen Endgerät nach Anspruch 10 ausgeführt wird.

12. Computerprogrammprodukt mit Programmcodemitteln, die auf einem computerlesbaren Datenträger gespeichert sind, um bei einem Track und Trace-Verpackungsverfahren nach einem der Ansprüche 1 bis 8 einen Benutzer an einem Batchworkflow an- oder abzumelden und/oder um eine Synchronisation von batchbezogenen Daten mit weiteren kommunikationsverbundenen mobilen Endgeräten in Echtzeit durchzuführen, wenn das Programm auf einem mobilen Endgerät nach Anspruch 10 ausgeführt wird.

## Claims

1. A track and trace packaging method for packaging goods comrpising one or more process steps (S1-S5), wherein a number of products is supplied as a batch to one or more trackable packaging units, in particular of different size, that, for tracking purposes, are provided with an identification (1, 11) that is read in during the at least one process step (S2-S5) and stored in a database and/or verified,
wherein a control unit creates a batch workflow comprising the at least one process step (S2-S5) for working on the batch,
wherein users can sign into or out of the batch or the batch workflow using a mobile terminal, which is communicatively connected to the control unit and/or to at least one other mobile terminal, and can undertake processing the at least one process step (S2-S5) partially or completely, and
wherein at least one process step (S2-S5) is carried out completely or partially by a packaging plant in a supporting capacity,
**characterized in that**
mobile terminals signed into the batch workflow are communicatively connected to one another directly and synchronize one another in real time.

2. The track and trace packaging method according to claim 1, wherein the at least one process step (S2-S5) which is carried out completely or partially by the packaging plant in a supporting capacity is controlled by the control unit.

3. The track and trace packaging method according to claim 1 or 2, wherein the identification of the at least one packaging unit is read in using the mobile terminal.

4. The track and trace packaging method according to claim 1, 2 or 3, wherein multiple users can work on the same process step in parallel.

5. The track and trace packaging method according to one of claims 1 to 4, wherein signing into or out of the batch workflow is accomplished by way of the control unit, by way of the at least one other mobile terminal or by way of a cloud system (9).

6. The track and trace packaging method according to one of claims 1 to 5, wherein the mobile terminal receives the data from the preceding process step (S2-S4) in the next process step (S3-S5), as a result of which the work can be continued.

7. The track and trace packaging method according to one of claims 1 to 6, wherein user authentication is accomplished by way of a cloud system (9) or a connection to a local domain or by a local user management on the mobile terminal.

8. The track and trace packaging method according to one of claims 1 to 7, wherein the users are assigned to groups, the groups being used to stipulate which process steps (S1-S5) a respective user can work on.

9. A system consisting of a packaging plant, one or more mobile terminals and a control unit for the packaging plant, wherein the control unit is communicatively connected to the packaging plant, is communicatively connectable to the at least one mobile terminal and is configured to control at least one process step (S2-S5) of a track and trace packaging method according to one of claims 1 to 8 that is taking place on a process module of the packaging plant, and wherein a batch workflow comprising the at least one process step (S2-S5) for working on a batch is creatable in the control unit.

10. A mobile terminal for use in a track and trace packaging method according to one of claims 1 to 8, which mobile terminal is communicatively connectable to the control unit and/or at least one other mobile terminal, and which mobile terminal is configured to use the communication connection to interchange batch-related data, in particular to sign a user into or out of the batch workflow, and which mobile terminal is further configured to synchronize batch-related data with the at least one other communicatively connected mobile terminal in real time.

11. A computer program comprising program code means in order, during a track and trace packaging method according to one of claims 1 to 8, to sign a user into or out of a batch workflow and/or to carry out a synchronization of batch-related data with other communicatively connected mobile terminals in real time when the program is executed on a mobile terminal according to claim 10.

12. A computer program product comprising program code means that are stored on a computer-readable data carrier in order, during a track and trace packaging method according to one of claims 1 to 8, to sign a user into or out of a batch workflow and/or to carry out a synchronization of batch-related data with other communicatively connected mobile terminals in real time when the program is executed on a mobile terminal according to claim 10.

## Revendications

1. Procédé d'emballage avec suivi et traçage destiné à emballer des articles et comprenant une ou plusieurs étapes de processus (S1-S5), un certain nombre de produits étant amené sous forme de lot à une ou plusieurs unités d'emballage, en particulier de différentes dimensions, pouvant être suivies, qui sont dotées, pour le suivi, d'un signe caractéristique (1, 11) qui est lu au cours de l'au moins une étape de processus (S2-S5) et qui est stocké et/ou vérifié dans une base de données,
un flux de travail par lots avec l'au moins une étape de processus (S2-S5) pour le traitement du lot étant créé sur une unité de commande,
les utilisateurs pouvant se connecter au lot ou au flux de travail par lots, ou se déconnecter de celui-ci, au moyen d'un terminal mobile qui est relié de manière communicative à l'unité de commande et/ou à au moins un autre terminal mobile et pouvant prendre en charge partiellement ou totalement le traitement de l'au moins une étape de processus (S2-S5), et
au moins une étape de processus (S2-S5) étant totalement ou partiellement réalisée en plus par une installation d'emballage,
**caractérisé en ce que**
les terminaux mobiles connectés au flux de travail par lots sont directement reliés de manière communicative les uns aux autres et se synchronisent entre eux en temps réel.

2. Procédé d'emballage avec suivi et traçage selon la revendication 1, l'au moins une étape de processus (S2-S5), qui est totalement ou partiellement réalisée en plus par l'installation d'emballage, étant commandée par l'unité de commande.

3. Procédé d'emballage avec suivi et traçage selon la revendication 1 ou 2, le terminal mobile étant utilisé pour lire le signe caractéristique de l'au moins une unité d'emballage.

4. Procédé d'emballage avec suivi et traçage selon la revendication 1, 2 ou 3, plusieurs utilisateurs pouvant traiter en parallèle la même étape de processus.

5. Procédé d'emballage avec suivi et traçage selon l'une des revendications 1 à 4, la connexion ou la déconnexion du flux de travail par lots étant effectuée par le biais de l'unité de commande, de l'au moins un autre terminal mobile ou d'un système Cloud (9).

6. Procédé d'emballage avec suivi et traçage selon l'une des revendications 1 à 5, le terminal mobile recevant les données de l'étape de processus précédente (S2-S4) lors de l'étape de processus suivante (S3-S5), ce qui permet de poursuivre le traitement.

7. Procédé d'emballage avec suivi et traçage selon l'une des revendications 1 à 6, l'authentification de l'utilisateur étant effectuée par le biais d'un système Cloud (9) ou d'une liaison à un domaine local ou par une gestion locale des utilisateurs sur le terminal mobile.

8. Procédé d'emballage avec suivi et traçage selon l'une des revendications 1 à 7, les utilisateurs étant associés à des groupes, les groupes permettant de déterminer quelles étapes de processus (S1-S5) un utilisateur respectif doit traiter.

9. Système comprenant une installation d'emballage, un ou plusieurs terminaux mobiles et une unité de commande de l'installation d'emballage, l'unité de commande étant reliée de manière communicative à l'installation d'emballage, pouvant être reliée de manière communicative à l'au moins un terminal mobile et étant conçue pour commander au moins une étape de processus (S2-S5), se déroulant sur un module de processus de l'installation d'emballage, d'un processus d'emballage avec suivi et traçage selon l'une des revendications 1 à 8, et un flux de travail par lots comportant au moins une étape de processus (S2-S5) pour traiter un lot pouvant être créé sur l'unité de commande.

10. Terminal mobile destiné à être utilisé dans un procédé d'emballage avec suivi et traçage selon l'une des revendications 1 à 8, lequel terminal mobile peut être relié de manière communicative à l'unité de commande et/ou à au moins un autre terminal mobile, et est conçu pour échanger des données liées à des lots par le biais de la liaison de communication, en particulier pour connecter un utilisateur au flux de travail par lots ou le déconnecter de celui-ci, et qui est en outre conçu pour synchroniser des données liées à des lots en temps réel avec l'au moins un autre terminal mobile relié de manière communicative.

11. Programme informatique comprenant des moyens de code de programme afin de, dans un procédé d'emballage avec suivi et traçage selon l'une des revendications 1 à 8, connecter un utilisateur à un flux de travail par lots ou le déconnecter de celui-ci et/ou synchroniser en temps réel les données, liées à des lots, avec d'autres terminaux mobiles reliés de manière communicative, lorsque le programme est exécuté sur un terminal mobile selon la revendication 10.

12. Produit programme informatique comprenant des moyens de code de programme qui sont mémorisés sur un support de données lisible par ordinateur afin de, dans un procédé d'emballage avec suivi et traçage selon l'une des revendications 1 à 8, connecter un utilisateur à un flux de travail par lots ou le déconnecter de celui-ci et/ou synchroniser en temps réel les données, liées à des lots, avec d'autres terminaux mobiles reliés de manière communicative, lorsque le programme est exécuté sur un terminal mobile selon la revendication 10.
